## Europäisches Patentamt

## European Patent Office

## Office européen des brevets

(19)

(11) Veröffentlichungsnummer: **0 052 346**
**B1**

(12) **EUROPÄISCHE PATENTSCHRIFT**

(45) Veröffentlichungstag der Patentschrift:
24.05.89

(51) Int. Cl.⁴: **H 02 K 29/06,** H 02 P 3/22,
B 60 L 9/00, H 02 K 41/02

(21) Anmeldenummer: **81109637.9**

(22) Anmeldetag: **11.11.81**

(54) Elektrischer Antrieb oder Generator.

| | |
|---|---|
| Teilanmeldung 88103200 eingereicht am 02.03.88, Teilanmeldung 88103000 eingereicht am 29.02.88, Teilanmeldungen 88103077, 88103081 eingereicht am 01.03.88. | (73) Patentinhaber: **Magnet-Bahn GmbH, Emslanderstrasse 3, D-8130 Starnberg (DE)** |
| (30) Priorität: **11.11.80  DE 8030107 U** | (72) Erfinder: **Heidelberg, Götz, Dipl.-Phys., D-8136 Percha (DE)** Erfinder: **Gründl, Andreas, Dr., Haseneystrasse 20, D-8000 München 70 (DE)** Erfinder: **Rosner, Peter, Dr., Waltherstrasse 16, D-8000 München 2 (DE)** |
| (43) Veröffentlichungstag der Anmeldung: 26.05.82 Patentblatt 82/21 | |
| (45) Bekanntmachung des Hinweises auf die Patenterteilung: 24.05.89 Patentblatt 89/21 | (74) Vertreter: **Vogl, Leo, Dipl.-Ing., AEG Aktiengesellschaft Patente u. Lizenzen Theodor-Stern-Kai 1 Postfach 70 02 20, D-6000 Frankfurt am Main 70 (DE)** |
| (84) Benannte Vertragsstaaten: **AT BE CH DE FR GB IT LI** | |

(56) Entgegenhaltungen:
CH-A- 526 221
DE-A- 2 806 601
DE-B- 1 267 333
DE-B- 2 128 996
DE-C- 718 353
FR-A- 2 043 974
US-A- 3 707 924
US-A- 3 802 349
US-A- 4 223 255

## Beschreibung

Die Erfindung bezieht sich auf einen elektrischen Linearantrieb mit einem mit einer Mehrphasenwicklung versehenen Stator und einem mit Dauermagneten versehenen Läufer, die mit einem Spaltabstand zwischen sich angeordnet sind,

wobei der Stator in jeweils mehrere Polteilungen umfassende Statorabschnitte unterteilt ist, deren Phasenwicklungen je über eine Schalteinrichtung an eine Stromquelle anschaltbar sind,

wobei an den einzelnen Statorabschnitten Sensoren vorgesehen sind, die auf dem Läufer vorgesehene Steuerelemente ansprechen und mittels welchen in Abhängigkeit von der Relativstellung von Läufer und Statorabschnitt eine phasenrichtige Stromspeisung in die jeweilige Phasenwicklung gesteuert und die Läuferanwesenheit festgestellt wird.

Bei enem bekannten Linearantrieb dieser Art, wie er aus der DE-A1-2 806 60 bekannt ist, sind an den einzelnen Statorabschnitten Sensoren vorgesehen, mittels welchen in Abhängigkeit von der Relativstellung von Läufer und Statorabschnitt eine phasenrichtige Stromeinspeisung in die jeweilige Phasenwicklung bewerkstelligt werden soll. Allerdings sind bei diesem bekannten Linearantrieb lediglich zwei Sensoren vorgesehen, an jedem Statorabschnittsende einer, mit denen aber insbesondere bei Statorabschnittlängen, die größer sind als die Läuferlänge, eine pollagerechte Steuerung des eingespeisten Stroms noch nicht ohne weiteres möglich ist. Darüber, wie die Ein- und Ausschaltung der einzelnen Statorabschnitte gesteuert wird, sind in dieser Druckschrift keine Angaben gemacht.

Aus der FR-A-2 043 974 ist es bei einem elektrischen Linearantrieb bekannt, den Stator durch eine Vielzahl hintereinander angeordneter Magnetspulen zu bilden, je zwei Magnetspulen einen Magnetschalter zuzuordnen und am Läufer einen Permanentmagneten anzubringen, mit dem die Magnetschalter geschaltet werden können. Mit dieser Anordnung soll eine weiche Anfahrbeschleunigung erreicht werden, indem bei stehendem Läufer zunächst die ersten beiden Spulen eingeschaltet und dann fortschreitend mit Hilfe der Magnetschalter immer weitere Magnetspulen zugeschaltet werden. Zum Bremsen des Läufers werden sämtliche Magnetspulen im Vorhinein unter Strom gesetzt und nicht abgeschaltet, damit der Bremseffekt erhalten wird. In diesem bekannten Fall ist eine sehr hohe Anzahl von Sensoren und von entsprechend vielen Steuerschaltungen erforderlich.

Feldwicklungen eines elektrischen Motors mittels Sensoren ein- und auszuschalten, ist auch für Rotationsmotoren bereits bekannt, und zwar aus der CH-A-526 221, bei welcher Photozellen als Sensoren verwendet werden, und aus der DE-C-718 353, bei welcher Reed-Kontakte verwendet werden, die von den Permanentmagnetstäben des umlaufenden Rotors geschaltet werden.

Aus der DE-B-1 267 333 ist es für einen Stromrichterrotationsmotor bekannt, eine kontaktlose Umschaltung zwischen den einzelnen Maschinenphasen mit Hilfe eines magnetfeldempfindlichen Sensors durchzuführen, der auf die Stellung des Polrades reagiert, oder einen Sensor mit einer Rasterscheibe elektrisch, magnetisch oder lichtelektrisch zu beeinflussen.

Der Erfindung liegt die Aufgabe zugrunde, den elektrischen Linearantrieb der eingangs angegebenen Art so weiterzubilden, daß mit möglichst geringem Gesamtaufwand unabhängig von der jeweils gewählten Beziehung zwischen Statorabschnittlänge und Läuferlänge eine sichere pollagegerechte Stromeinspeisung sowie Ein- und Ausschaltung der einzelnen Statorabschnitte erreicht wird.

Eine Lösung der Aufgabe besteht darin, die Steuerelemente in einer Steuerelementreihe anzuordnen, wobei die auf die Sensoren wirksamen Bereiche jeweils die Länge einer Polteilung aufweisen und sich im doppelten Polteilungsabstand wiederholen, und den Phasen zugeordnete Sensoren und weitere Sensoren zu Gruppen zusammenzufassen, die sich längs des Stators in einem Periodizitätsintervall wiederholen, das der Länge der Steuerelementreihe entspricht, wobei den Phasen zugeordnete Sensoren einer Gruppe innerhalb einer Polteilung des jeweiligen Periodizitätsintervalls angeordnet sind und der weitere Sensor der Gruppe innerhalb einer benachbarten Polteilung angeordnet ist.

Durch die erfindungsgemäßen Maßnahmen wird erreicht, daß mit einem Minimalaufwand an Sensoren in reiner Selbststeuerung des Linearantriebs durch den Läufer eine optimale und pollagegerechte Ein/Aus-Schaltung aller Phasenwicklungen des jeweils befahrenen Statorabschnitts und damit auch eine automatische Ein/Aus-Schaltung der einzelnen Statorabschnitte gewährleistet ist.

Eine Weiterbildung der Erfindung ist dadurch gekennzeichnet, daß der Bereich des Läufers, auf den der Sensor anspricht, gegenüber den Dauermagneten oder der Sensor gegenüber dem Stator in Richtung der Relativbewegung von Stator und Läufer verschiebbar ist. Dies gibt eine einfache Möglichkeit, die normale Antriebsfunktion zu modifizieren, beispielsweise die Geschwindigkeit des Linearantriebs zu ändern, den Linearantrieb auszuschalten, oder die Richtung des Linearantriebs umzukehren.

Vorzugsweise verwendet man auf die funktionell sowieso vorgesehenen Dauermagnete oder auf gesondert zu diesem Zweck angeordnete Dauermagnete ansprechende Sensoren. Dies führt, besonders im erstgenannten Fall, zu einem einfach aufgebauten Linearantrieb. Besonders bevorzugte Arten von Sensoren sind Hallsonden, Reedkontakte, Photozellen, Ultraschallsensoren, Gasstromsensoren, Induktionssensoren oder Permeabilitätssensoren.

Den Stator in mehrere Statorabschnitte, nachfolgend auch einfach Abschnitte genannt, aufzuteilen, denen jeweils eine Schalteinrichtung zugeordnet ist, bringt zahlreiche Vorteile. Da pro Abschnitt geringere Ströme bzw. Leistungen verarbeitet werden müssen, ergibt sich eine Verteilung der elektrischen Verluste. Da pro Abschnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1000 V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen.

Für viele Linearantriebe macht man den Läufer wesentlich kürzer als den Stator. Insbesondere in diesem Fall ist es besonders vorteilhaft, die Länge der Abschnitte mindestens so groß zu machen wie die Länge der Steuermagnetreihe, das heißt die Länge der in Läuferbewegungsrichtung auf dem Läufer hintereinander angeordneten Steuermagnete. Dies gilt natürlich sinngemäß auch, wenn nicht auf Magnetfelder ansprechende Sensoren verwendet werden und entsprechend andere, auf solche Sensoren einwirkende Steuereinrichtungen am Läufer verwendet werden.

Zur Erzielung einer gleichmäßigeren Antriebskraft bringt man pro Statorpol mehrere voneinander getrennt ansteuerbare Stromleiter unter. Zur Verringerung des Steueraufwandes kann man in diesem Fall vorteilhafterweise gleichzählige Stromleiter mehrerer Statorpole zu einer Stromleitergruppe zusammenschalten, die dann von einer gemeinsamen Schalteinrichtung angesteuert werden. Vorzugsweise werden die gleichzähligen Stromleiter der einzelnen Statorpole jeweils eines ganzen Abschnittes zu einer Stromleitergruppe hintereinandergeschaltet.

Erfindungsgemäß besteht eine Verteilung der Sensoren längs des Stators derart, daß bei jeder Läuferstellung für jede der Stromleitergruppen einer der ihr zugeordneten Sensoren von dem am Läufer angeordneten Steuermagneten bzw. anderen Steuereinrichtungen beeinflußbar ist. Durch diese Sensorverteilung wird erreicht, daß man die jeweils betrachtete Stromleitergruppe solange eingeschaltet hält, wie von einem der dieser Stromleitergruppe zugeordneten Sensoren das Vorhandensein des Läufers im Bereich dieser Stromleitergruppe, vorzugsweise im Bereich des mit dieser Stromleitergruppe übereinstimmenden Abschnittes, festgestellt wird. Man umgeht dabei Probleme, die besonders dann, wenn der Läufer in Vorwärts- und Rückwärtsrichtung bewegbar sein soll, dadurch auftreten können, daß ein Teil der Sensoren eine Einschaltung und der Rest der Sensoren eine Abschaltung der Erregung der zugehörigen Stromleitergruppen bewirken soll.

Die den einzelnen Stromleitergruppen oder Phasen zugeordneten Sensoren sind zusammen mit den weiteren Sensoren zu Sensorgruppen zusammengefaßt, wobei die den Phasen zugeordneten Sensoren je in einer Statorpolbreite untergebracht sind. Dabei befinden sich zwischen aufeinanderfolgenden Sensorgruppen Lücken und die Sensorgruppen folgen in Periodizitätsintervallen aufeinander, die der Länge der Steuermagnetreihe bzw. der Steuereinrichtungsreihe am Läufer entspricht.

Vorzugsweise sind die weiteren Sensoren in den Lücken zwischen den den Phasen zugeordneten Sensoren mit gleicher Periodizität wie die Sensorgruppen untergebracht. Diese weiteren Sensoren können für die Anzeige verwendet werden, daß sich im jeweils betrachteten Bereich bzw. Abschnitt ein Läufer befindet.

Insbesondere kann man mit diesen weiteren Sensoren auch Sensorgruppen ersetzen, wodurch man eine beträchtliche Anzahl Sensoren einsparen kann. Dabei kann man die Lücken zwischen aufeinanderfolgenden Gruppen von den Phasen zugeordneten Sensoren größer machen. Es wechseln sich dann während der Läuferbewegung Zeitpunkte, zu welchen eine Gruppe von den Phasen zugeordneten Sensoren von den Steuermagneten des Läufers beeinflußt wird, mit Zeitpunkten, zu welchen nur ein weiterer Sensor von den Steuermagneten beeinflußt wird, ab. Wie das im einzelnen aussehen kann, wird weiter unten erläutert. Die Verwendung solcher weiterer Sensoren führt insbesondere dann zu einer beträchtlichen Einsparung von Sensoren, wenn man bei der Verwendung von Steuermagneten als Steuereinrichtungen am Läufer Sensoren verwendet, die nur auf eine Magnetpolart, beispielsweise nur auf Südpol-Dauermagneten, anspricht. Dies ist vorteilhaft, wenn man an den Sensorausgängen nur zwei Informationswerte, nämlich Sensor beeinflußt oder nicht beeinflußt, verarbeiten möchte, um mit einer binären Digitalschaltung auskommen zu können. Würde man sowohl auf Nord- als auch auf Südpole ansprechende Sensoren verwenden, stünden an deren Ausgängen drei Informationen zur Verfügung, nämlich Südpol festgestellt, Nordpol festgestellt, kein Magnet festgestellt. In diesem Fall müßte man mit einer etwas aufwendigeren, da drei mögliche Zustände verkraftenden Digitalschaltung auskommen.

Eine bevorzugte Verwendung des nach den beschriebenen Prinzipien aufgebauten, erfindungsgemäßen Linearantriebs liegt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen. Bei all diesen Einsatzzwecken kommen der einfache konstruktive Aufbau und die vielfältigen Regelungsmöglichkeiten zum Tragen.

Bei einer Reihe von Einsatzzwecken ist es günstig, die Statorstromleiter in die Fahrbahn einzubetten, so daß die Fahrbahnoberfläche nach wie vor das übliche Aussehen bildet und in üblicher Weise befahren werden kann. Man kann auch die Schalteinrichtung in der Fahrbahn versenkt anordnen.

Eine weitere Verwendung des nach den Prinzipien der Erfindung aufgebauten Linearantriebs besteht im Einsatz als linearer Positionierantrieb.

Die Erfindung wird im folgenden anhand schematisiert dargestellter Ausführungsbeispiele noch näher erläutert. Es zeigen:

Fig. 1 einen Längsschnitt durch einen Linearantrieb längs I–I in Fig. 4;

Fig. 2 eine Ansicht von unten auf den Stator des Linearantriebs von Fig. 1 entsprechend II–II in Fig. 1;

Fig. 3 eine Ansicht von oben auf den Läufer des Linearantriebs von Fig. 1 entsprechend III–III in Fig. 1;

Fig. 4 einen Querschnitt des Linearantriebs von Fig. 1 längs IV–IV in Fig. 1;

Fig. 5 bis 9 Ausführungsformen elektrischer Schaltungen, die zur Steuerung der in den Fig. 1 bis 4 dargestellten Ausführungsform eines Linearantriebs verwendbar sind; und

Fig. 10 eine Wahrheitstabelle für eine Ansteuerlogik des Linearantriebs.

In den verschiedenen Ausführungsbeispielen werden Teile, die sich funktionell entsprechen, mit gleichen Bezugszeichen versehen.

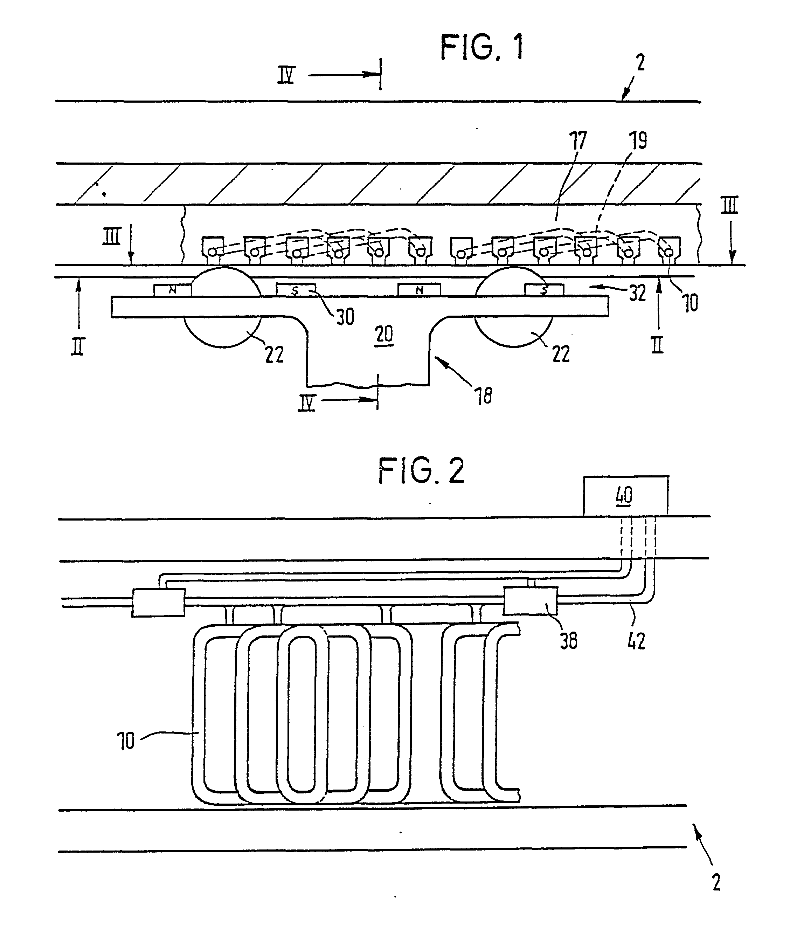

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von «Antrieb» gesprochen, obwohl die Auslegung ohne weiteres so getroffen sein kann, daß bei einer Verlangsamung der Geschwindigkeit der Transporteinheit von Antriebsfunktion auf Generatorfunktion umgeschaltet werden kann.

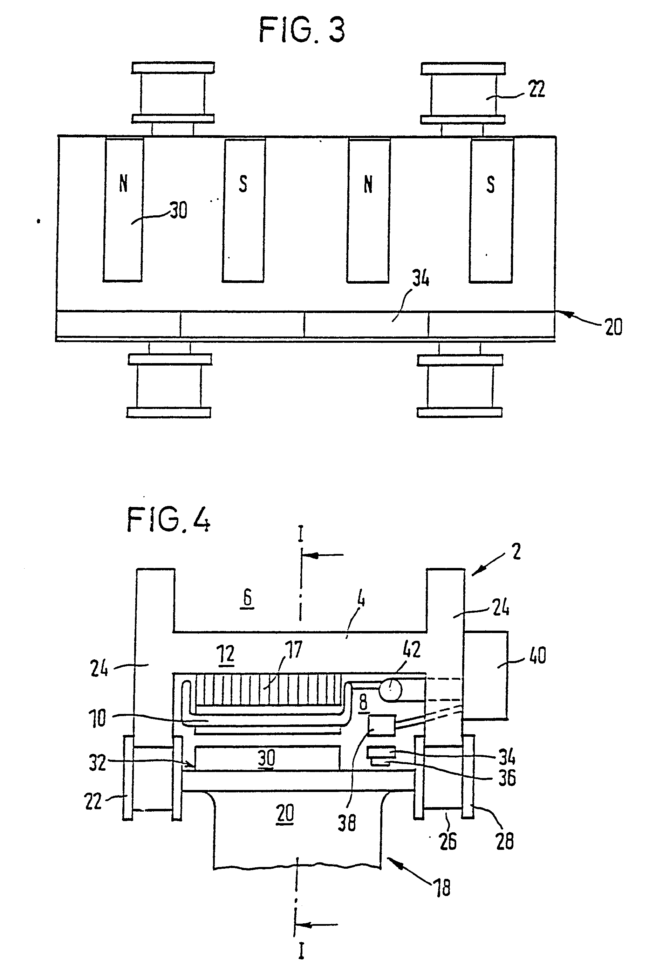

Der tragende Bestandteil des Stators 2 des Linearantriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa rechteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von den Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unten zum anderen Querast, um auf diese Weise Platz für die Überkreuzung mit den Längsästen der beiden benachbarten Spulen zu schaffen.

Das Paket 17 bildet zusammen mit den eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilchen oder Eisenoxidteilchen sehr kleiner Korngröße von beispielsweise 70 μm besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit vier drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs. Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite, fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulververfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38, deren Lageanordnung später genauer beschrieben wird, in Bewegungsrichtung des Wagens 20 verteilt mit geringem Abstand über den Steuermagneten 34 angeordnet. Die Hallsonden 38 liefern ihr Signal «Steuermagnet 34 befindet sich unter der Sonde» an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorg sämtliche Spulen 10 mit Strom. Wie weiter unten noch ausführlicher beschrieben werden wird, ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 30. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich vom Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Ausführungsbeispiel ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung, zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen sind.

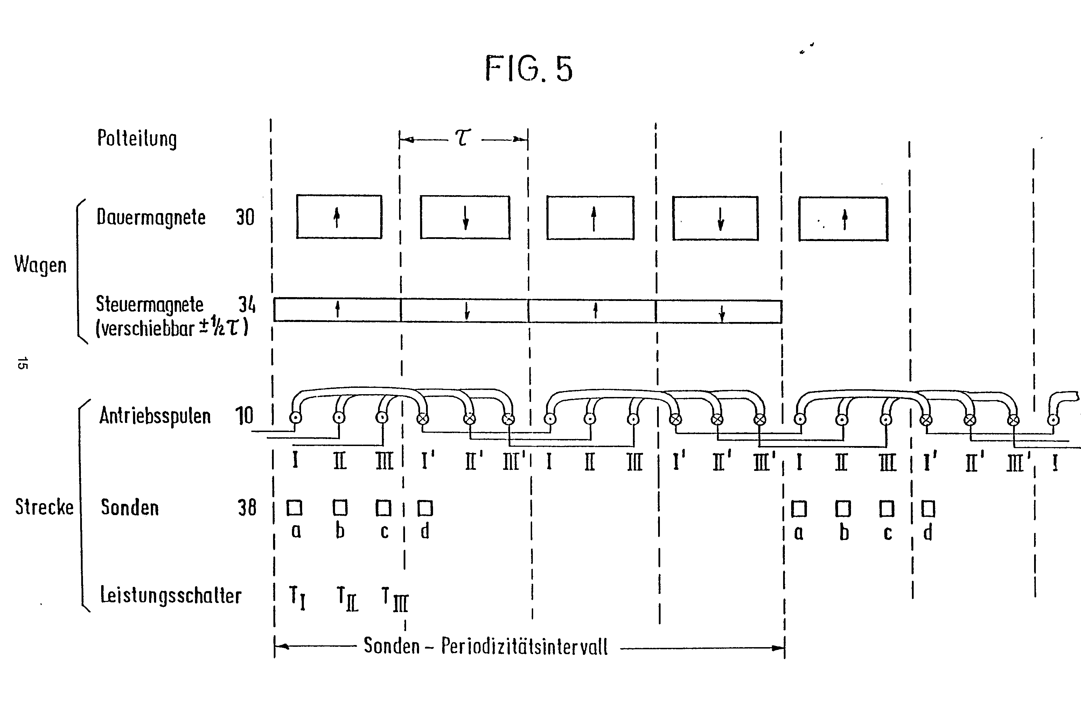

Anhand der Figuren 5 bis 10 wird nun eine bevorzugte Ausführungsform eines aus Linearantrieb und Steuerelektronik bestehenden Linearantriebssystems mit einigen Variationen erläutert.

Fig. 5 zeigt schematisch Stromleiter bzw. Spulen 10, deren Queräste, die einem Statorpol zugeordnet sind, mit I, II und III bezeichnet sind, während deren andere Queräste, die in der Zeichnung im rechts daneben befindlichen Statorpol angeordnet sind, mit I′, II′ und III′ bezeichnet sind. Innerhalb eines Abschnittes des Stators sind die gleichzähligen Spulen alle hintereinandergeschaltet, wie es in Fig. 5 angedeutet ist. Die gleichzähligen Spulen eines Abschnittes können jedoch auch parallel zueinander geschaltet sein. In Fig. 5 sind ganz oben die am Läufer 32 angeordneten Dauermagnete 30 dargestellt, und zwar pro Statorpolteilung $\tau$ einer. Dabei wechseln sich Dauermagnete mit zum Stator weisendem Südpol und Dauermagnete mit zum Stator weisendem Nordpol ab (im folgenden kurz «Südpol-Magnet» bzw. «Nordpol-Magnet» genannt).

Zwischen den als Antriebsspulen wirkenden Statorspulen 10 und den Dauermagneten 30 sind, ebenfalls schematisch, die Steuermagnete 34 dargestellt, die in der Statorpoleinteilung ebenfalls abwechselnd Nordpol- und Südpol-Dauermagnete sind. Diese Steuermagnete 34 sind auf der bereits erwähnten Stange 36 angeordnet und sind mit dieser in Bewegungsrichtung des Läufers bzw. des Wagens 20 relativ zu den Dauermagneten 30 verschiebbar. Bei der in Fig. 5 schematisch dargestellten Ausführungsform weist der Wagen fünf Dauermagnete 30 und vier Steuermagnete 34 auf.

In Fig. 5 sind unterhalb der Statorspulen 10 als Rechtecke schematisch Hallsonden 38 dargestellt. Dabei sind die Hallsonden an den in Fig. 5 linken Querästen der Spulen I, die Hallsonden b den linken Querästen der Spulen II und die Hallsonden c den linken Querästen der Spulen III zugeordnet. In der bevorzugten Ausführungsform sind die Hallsonden a, b und c zu Hallsondengruppen zusammengefaßt, die je im Bereich eines Statorpols angeordnet sind und zwischen sich Lücken aufweisen, die von der Länge der Steuermagnetreihe abhängen. Bei der in Fig. 5 dargestellten Ausführungsform, bei der fünf Dauermagnete 30 und vier verschiebbare Steuermagnete 34 vorgesehen sind, folgt auf jede Hallsondengruppe a, b, c eine Lücke entsprechend dreier Statorpolbreiten.

Man könnte nun Hallsonden zum Einsatz bringen, die sowohl auf Nordpol- als auch auf Südpol-Dauermagnete ansprechen. Da unterschieden werden müßte, ob sich über einer bestimmten Spule 10 ein Nordpol- oder ein Südpol-Dauermagnet befindet, müßten am Ausgang der Hallsonden drei verschiedene Informationen verarbeitet werden, nämlich

1. ein Südpol beeinflußt die Hallsonde,
2. ein Nordpol beeinflußt die Hallsonde und
3. die Hallsonde ist außer Einfluß durch einen Magneten.

Ein solches System mit drei unterschiedlichen Informationen würde man zweckmäßigerweise nicht mit binären Digitalschaltungen weiterverarbeiten, sondern mit Digitalschaltungen, die auf die Verarbeitungen dreier unterschiedlicher Signalzustände eingerichtet sind.

Bei der in Fig. 5 dargestellten bevorzugten Ausführungsform verwendet man Hallsonden 38, die nur auf Nordpol- oder nur auf Südpol-Dauermagneten ansprechen. Für die weitere Beschreibung wird vereinfachend vorausgesetzt, daß die Hallsonden 38 nur auf Südpol-Dauermagneten ansprechen.

Die Spulenstrecke eines jeden Statorabschnittes wird nicht mittels Hallsonden am Abschnittanfang eingeschaltet und mittels Hallsonden am Abschnittende ausgeschaltet, sondern die Spulenstrecke eines Abschnittes bleibt dadurch eingeschaltet, daß während der gesamten Aufenthaltszeit des sich bewegenden Wagens im Abschnitt von den Steuermagneten immer Hallsonden beeinflußt sind. Bei der bevorzugten Ausführungsform nach Fig. 5 hat man nun eine Einsparung von Hallsonden dadurch erreicht, daß man in den Lükken zwischen aufeinanderfolgenden Hallsondengruppen a, b, c weitere Hallsonden d, nachfolgend auch Einzelhallsonden genannt, angeordnet hat. Und zwar an solchen Stellen, daß diese Einzelhallsonden d dann von einem Südpol-Steuermagnet 34 beeinflußt werden, wenn sich unter dem Steuermagneten 34 befindliche Hallsondengruppen a, b, c nur unter einem Nordpol-Steuermagneten 34 befinden, auf den sie nicht ansprechen. Während bei einer Beeinflußung von Hallsonden a, b, c durch einen Südpol-Steuermagneten die Queräste I, II bzw. III der Spulen beispielsweise in einer in Fig. 5 in die Zeichenebene hineinzeigenden Richtung von Strom durchflossen werden, muß lediglich dafür gesorgt werden, daß dann, wenn nur die Einzelhallsonde d von einem Südpol-Steuermagneten beeinflußt wird, nicht aber die Hallsonden a, b, c, die Stromrichtung durch die Antriebsspulen umgekehrt wird.

Allgemein kann man also sagen, daß die Hallsondengruppen a, b, c und die Einzelhallsonde d derart entlang des Stators verteilt sind, daß immer mindestens eine Hallsonde der Hallsondengruppe a, b, c oder mindestens eine Einzelhallsonde d von einem Südpol-Steuermagneten beeinflußt ist.

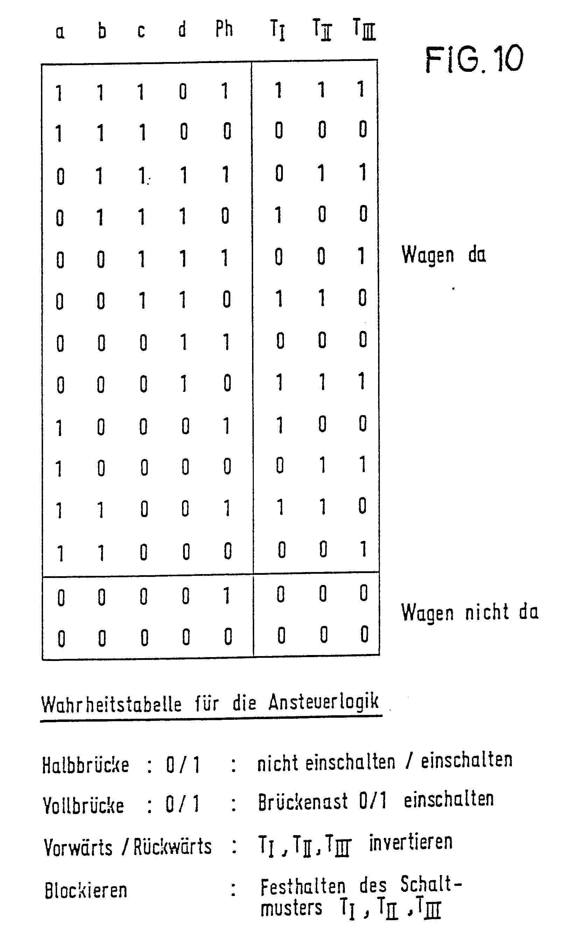

Die Ansteuerung der einzelnen Spulen 10 wird weiter unten noch ausführlicher anhand der Wahrheitstabelle in Fig. 10 erläutert.

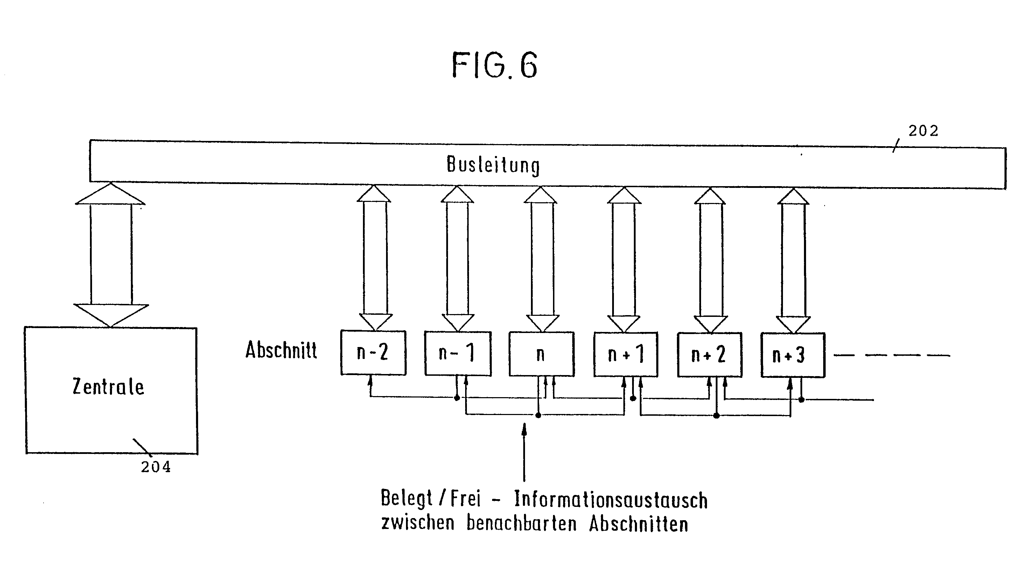

Fig. 6 zeigt eine Einteilung des linearen Stators 2 in eine Vielzahl von einzelnen Abschnitten $n-2$, $n-1$, $n$, $n+1$, ..., die je mittels einer Eingabe/Ausgabeschaltung 200 mit einer Busleitung 202 verbunden sind. Diese stellt eine Verbindung zwischen den einzelnen Abschnitten und einer Zentrale 204 her, mittels welcher das gesamte Linearantriebssystem gesteuert werden kann. Die einzelnen Abschnitte sind mit den benachbarten Abschnitten verbunden, wie in Fig. 6 unterhalb der Abschnitte dargestellt ist. Diese Verbindungen dienen dazu, beim Wechsel des sich bewegenden Wagens 20 von einem zum nächsten Abschnitt sicherzustellen, daß immer nur ein Abschnitt seine Daten über die Busleitung 202 an die Zentrale gibt. Beispielsweise wird jeweils dem Abschnitt mit höherer Numerierung, im folgenden höherer Abschnitt genannt, vor dem Abschnitt niedrigerer Numerierung, im folgenden niedrigerer Abschnitt genannt, Priorität zuerkannt. Dies geschieht dadurch, daß dann, wenn sich der bewegte Wagen 20 beim Wechsel vom einen zum anderen Abschnitt vorübergehend auf Teilen beider Abschnitte befindet, der höhere Abschnitt den niedrigeren Abschnitt an einer Informationsabgabe an die Busleitung 202 hindert.

Dieses Linearantriebssystem eignet sich auch für das gleichzeitige Antreiben mehrerer voneinander beabstandeter Wagen 20. Hierfür kann man beispielsweise jedem Abschnitt einen Speicher zuordnen, dessen Speicherinhalt den Zustand des jeweiligen Abschnittes anzeigt. Die Zentrale 204 kann dann über die Busleitung 202 in vorbestimmten kurzen Zeitabständen reihum die Inhalte der den einzelnen Abschnitten zugeordneten Speicher abfragen. Zu diesem Zweck können die einzelnen Speicher adressierbar mittels Adressenwörtern anwählbar sein.

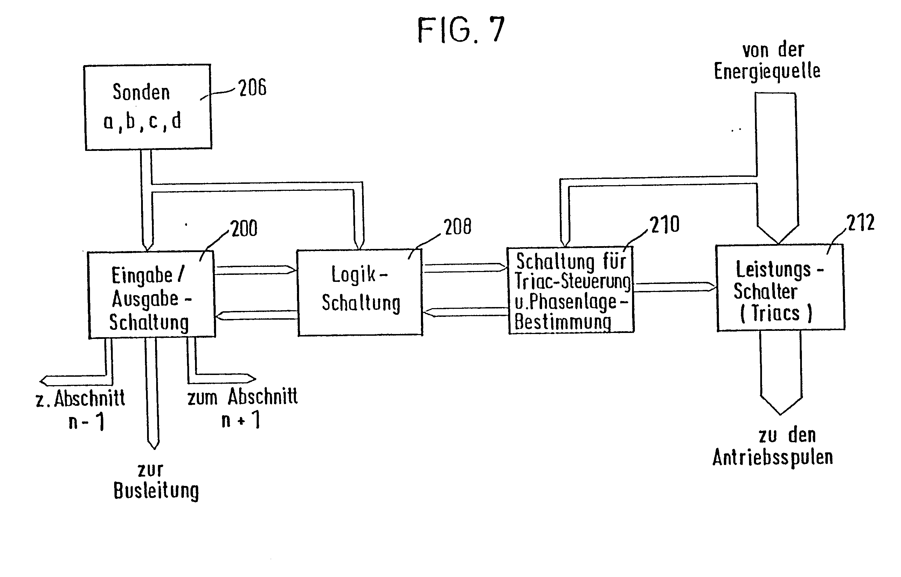

Fig. 7 zeigt ein Blockdiagramm eines Abschnittes, wobei es sich um den Abschnitt n handeln soll. Der Block 206 stellt die im folgenden kurz Sonden genannten Hallsonden a, b, c, d dar. Deren Ausgangssignale werden einerseits auf die Eingabe/Ausgabeschaltung 200 und andererseits auf eine Logikschaltung 208 geführt. Die Eingabe/Ausgabeschaltung 200 ist sowohl mit der Busleitung 202 verbunden als auch mit den benachbarten Abschnitten n−1 und n+1. Sobald sich im Abschnitt n ein Wagen 20 befindet, wird dies an den niedrigeren Abschnitt n−1 gemeldet. Wenn sich andererseits ein Wagen 20 im nächst höheren Abschnitt n+1 befindet, wird dies der Eingabe/Ausgabeschaltung des Abschnittes 1 gemeldet. Über die Eingabe/Ausgabeschaltung gelangen von der Zentrale 204 über die Busleitung 202 Steuerbefehle, beispielsweise bezüglich der maximalen Geschwindigkeit $v_{max}$ und des maximalen Vorschubes $F_{max}$, an die Logikschaltung 208. In der Logikschaltung 208 wird anhand der von den Sonden a, b, c kommenden Sondensignale und eines Phasenlagesignals, das beispielsweise während der Dauer einer positiven Halbwelle der Versorgungswechselspannung abgegeben wird, ein Spulenerregungsmuster für die Spulen 10 dieses Abschnittes n erzeugt. Außerdem bildet die Logikschaltung 208 ein Belegt-Signal dann, wenn sich ein Wagen 20 in diesem Abschnitt befindet. Dieses Belegt-Signal wird auf die Eingabe/Ausgabeschaltung 200 gegeben. Das in der Logikschaltung 208 gebildete Spulenerregungsmuster wird auf eine Schaltung 210 zur Steuerung der Halbleiterschalter, im bevorzugten Ausführungsbeispiel in Form von Triacs gegeben. Am Ausgang der Schaltung 210 steht ein Triac-Treibersignal zur Verfügung, das auf die Steuerelektroden der den einzelnen Spulen 10 zugeordneten Triacs geführt wird. Mit Hilfe der Triacs wird den Antriebsspulen 10 entsprechend dem von der Logikschaltung 208 gebildeten Erregungsmuster aus der Energiequelle, nämlich der zur Spulenerregung verwendeten Wechselspannungsquelle, Erregungsenergie zugeführt.

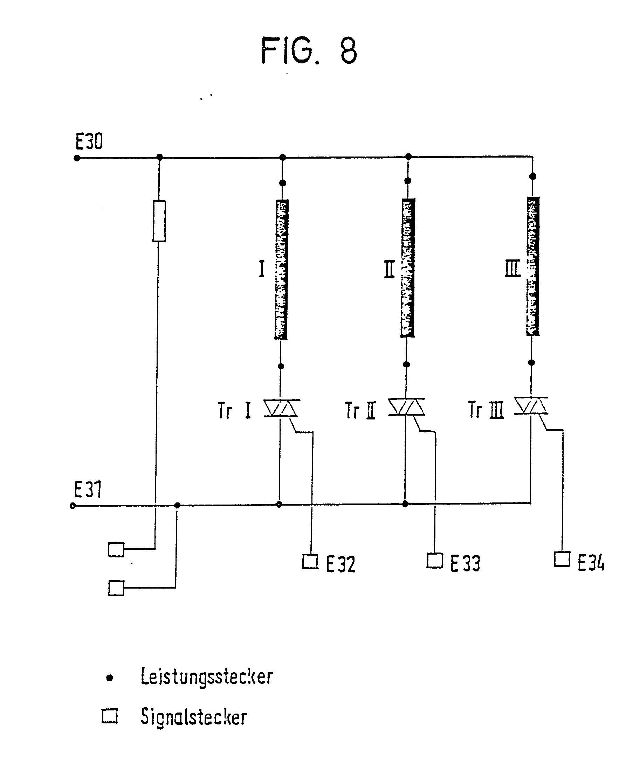

Eine Halbbrückenschaltung ist in Fig. 8 gezeigt. Diese Halbbrückenschaltung weist drei Brückenzweige auf, die je eine Reihenschaltung aus den hintereinandergeschalteten Spulen I bzw. II bzw. III des eigenen Abschnittes und einem als gesteuerter Halbleiterschalter dienenden Triac $T_I$ bzw. $T_{II}$ bzw. $T_{III}$ aufweisen. Über Eingangsanschlüssen $E_{30}$ und $E_{31}$ der Halbbrückenschaltung liegt die zur Spulenerregung verwendete Netzwechselspannung.

In Fig. 10 geben die Logikwerte in den Spalten unter $T_I$, $T_{II}$ und $T_{III}$ die Schaltzustände von zur Schalteinrichtung 40 gehörenden Triacs TrI, TrII, TrIII. Ein Logikwert «1» bedeutet, daß der zugehörige Triac eingeschaltet ist. Wie die Wahrheitstabelle zeigt, stimmt das Logikwert-Muster für die Triacs TrI, TrII, TrIII dann mit dem Logikwert-Muster der Hallsonden a, b, c überein, wenn das Phasenlagesignal Ph den Logikwert «1» aufweist.

Weist das Phasenlagesignal Ph dagegen den Logikwert «0» auf, ist das Logikwert-Muster der Triacs TrI, TrII, TrIII zum Logikwert-Muster der Hallsonden a, b, c invertiert. Wenn man bei dem in Fig. 5 dargestellten Aufbau annimmt, daß sich der Wagen mit den Dauermagneten 30 und den Steuermagneten 34 um eine Statorpolbreite τ nach rechts verschoben hat, wird keine der Hallsonden a, b, c von einem Südpol-Steuermagneten beeinflußt. Daß diese Relativstellung zwischen Wagen bzw. Läufer und Stator vorliegt, wird jedoch mit Hilfe der Einzelsonde d erkannt. In den Zeilen 7 und 8 der Wahrheitstabelle ist dies daran zu erkennen, daß die Logikwerte der Hallsonden a, b, c je «0» sind, der Logikwert der Einzelsonde d jedoch «1» ist. In diesem Fall kommt es zu einer Einschaltung der Triacs TrI, TrII, TrIII, wenn das Phasenlagesignal Ph den Logikwert «0» aufweist, also während der negativen Halbwelle. Hat sich der Läufer bzw. Wagen gegenüber der in Fig. 5 gezeigten Relativstellung gegenüber dem Stator um eine Statorpolteilung τ nach rechts verschoben, kommt es also zu einer Umkehr der Stromflußrichtung durch die Antriebsspulen, einhergehend mit einer Inversion des Logikwert-Musters der Hallsonden a, b, c während der negativen Halbwelle, wenn also das Phasenlagesignal Ph den Logikwert «0» aufweist.

Wird im eigenen Abschnitt keine der Hallsonden a, b, c, d von einem Wagen beeinflußt, d.h., sind deren Logikwerte alle «0», wird ein Sperrsignal erzeugt, bei dessen Vorhandensein keiner der Triacs leitend geschaltet werden kann.

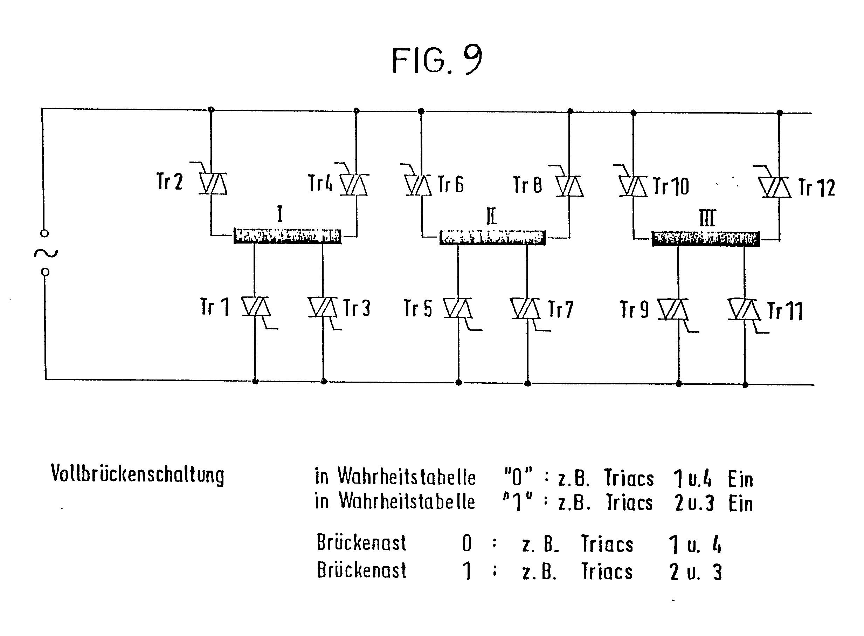

Fig. 9 zeigt eine Direktumrichter-Vollbrückenschaltung. Die Antriebsspulen I, II, III befinden sich je in einem Brückenast mit vier der Triacs $Tr_1$ bis $Tr_{12}$. Betrachtet man beispielsweise den Brückenzweig mit der Spule I und den Triacs $Tr_1$ bis $Tr_4$, so kann beispielsweise durch Leitend-Schalten der Triacs $Tr_1$ und $Tr_4$ Strom in einer Richtung und durch Leitend-Schalten der Triacs $Tr_2$ und $Tr_3$ Strom in der anderen Richtung durch die Spule I geschickt werden. Die Wahrheitstabelle in Fig. 10 gilt für die Vollbrücken-Schaltung gleichermaßen wie für die Halbbrücken-Schaltung. Allerdings haben die Logikwerte «1» und «0» für die Triacs nun, solange ein Wagen im Abschnitt ist, nicht mehr die Bedeutung Strom-Einschalten bzw. Strom-Nicht-Einschalten, sondern die Bedeutung Einschalten des Triacpaares für die eine Stromrichtung bzw. Einschalten des Triacpaares für die andere Stromrichtung durch die zugehörige Spule. Für die Spule I in Fig. 14 bedeutet dies beispielsweise, daß im Fall des Logikwertes «1» das Triacpaar $Tr_2$ und $Tr_3$ und im Fall des Auftretens des Logikwertes «0» das Triacpaar $Tr_1$ und $Tr_4$ eingeschaltet wird.

Die in Fig. 9 unteren Triacs $Tr_1$, $Tr_3$, $Tr_5$, $Tr_7$, $Tr_9$ und $Tr_{11}$ sind an Anzapfungen der zugehörigen Spulen I, II bzw. III angeschlossen. Damit wird verhindert, daß bei einem durch Störungen ausgelösten Zünden eines falschen Triac-Paares, z.B. $Tr_1$ und $Tr_2$ ein Kurzschluß auftritt. Der zwischen einem solchen Triac-Paar liegende Spulenteil bildet in diesem Fall einen Schutz für die Triacs.

**Patentansprüche**

1. Elektrischer Linearantrieb mit einem mit einer Mehrphasenwicklung versehenen Stator und einem mit Dauermagneten (30) versehenen Läufer, die mit einem Spaltabstand zwischen sich angeordnet sind,
wobei der Stator in jeweils mehrere Polteilungen (τ) umfassende Statorabschnitte unterteilt ist, deren Phasenwicklungen (I, II, III) je über eine Schalteinrichtung (40) an eine Stromquelle anschaltbar sind,
wobei an den einzelnen Statorabschnitten Sensoren (38) vorgesehen sind, die auf am Läufer vorgesehene Steuerelemente (34) ansprechen und mittels welchen in Abhängigkeit von der Relativstellung von Läufer und Statorabschnitt eine phasenrichtige Stromeinspeisung in die jeweilige Phasenwicklung gesteuert und die Läuferanwesenheit festgestellt wird, dadurch gekennzeichnet, daß die Steuerelemente (34) in einer Steuerelementreihe angeordnet sind, wobei die auf die Sensoren wirksamen Bereiche jeweils die Länge einer Polteilung aufweisen und sich im doppelten Polteilungsabstand wiederholen, daß den Phasen zugeordnete Sensoren (a, b, c) und weitere Sensoren (d) zu Gruppen zusammengefaßt sind, die sich längs des Stators in einem Periodizitätsintervall wiederholen, das der Länge der Steuerelementreihe entspricht, wobei den Phasen zugeordnete Sensoren (a, b, c) einer Gruppe innerhalb einer Polteilung (τ) des jeweiligen Periodizitätsintervalls angeordnet sind und der weitere Sensor (d) der Gruppe innerhalb einer benachbarten Polteilung angeordnet ist.

2. Elektrischer Linearantrieb nach Anspruch 1, dadurch gekennzeichnet, daß der Bereich des Läufers (32) auf den der Sensor (38) anspricht, gegenüber den Dauermagneten (30) oder der Sensor (38) gegenüber dem Stator (2) in Richtung der Relativbewegung von Stator (2) und Läufer (32) verschiebbar ist.

3. Elektrischer Linearantrieb nach Anspruch 1 oder 2, dadurch gekennzeichnet, daß der Sensor (38) ein auf Steuermagnete (34), gebildet durch die Dauermagneten oder durch gesonderte, auf dem verschiebbaren Bereich angeordnete Dauermagnete, ansprechender Sensor (38) ist.

4. Elektrischer Linearantrieb nach einem der vorhandenen Ansprüche, dadurch gekennzeichnet, daß der Sensor als Hallsonde (38), als Reedkontakt, als Photozelle, als Ultraschallsensor, Gasstromsensor, Induktionssensor oder Permeabilitätssensor ausgebildet ist.

5. Elektrischer Linearantrieb nach einem der vorhergehenden Ansprüche, dadurch gekennzeichnet, daß der Läufer (32) wesentlich kürzer als der Stator (2) ist und daß alle gleichzähligen Stromleiter der einzelnen Statorpole eines Statorabschnitts elektrisch zu einer Stromleitergruppe zusammengeschaltet sind, vorzugsweise durch Hintereinanderschaltung.

6. Elektrischer Linearantrieb nach einem der vorausgehenden Ansprüche, dadurch gekennzeichnet, daß pro Statorpol drei Stromleiter (I, II, III) pro Statorabschnitt drei Stromleitergruppen und pro Sensorgruppe drei Sensoren (a, b, c) vorgesehen sind.

7. Elektrischer Linearantrieb nach einem der vorausgehenden Ansprüche, dadurch gekennzeichnet, daß auf Magnetfelder ansprechende Sensoren (a, b, c, d) vorgesehen sind, die nur auf einen bestimmten magnetischen Pol (beispielsweise Südpol) ansprechen.

8. Verwendung des elektrischen Linearantriebs nach einem der Ansprüche 1 bis 7 beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen.

9. Verwendung des Antriebs nach einem der Ansprüche 1 bis 7 als linearer Positionierantrieb.

**Claims**

1. Electrical linear drive with a stator provided with a multi-phase winding and with a rotor provided with permanent magnets (30), which are arranged with a gap spacing therebetween, wherein the stator is subdivided into stator portions, which each comprise several pole pitches (τ) and the phase windings (I, II, III) of which are each switchable by way of a respective switching equipment (40) to a current source, wherein sensors (38), which respond to control elements (34) provided at the rotor and by means of which a correctly phased current feed into the respective phase winding is controlled in dependence on the relative setting of rotor and stator portion and the presence of the rotor is ascertained, are provided at the individual stator portions, characterised thereby, that the control elements (34) are arranged in a control element row, wherein the regions, which are effective on the sensor, each display the length of a pitch division and repeat at twice the pole pitch spacing, that sensors (a, b, c) associated with the phases and further sensors (d) are combined into groups which repeat along the stator at a periodic interval which corresponds to the length of the control element row, wherein sensors (a, b, c) associated with the phases of one group are arranged within one pole pitch (τ) of the respective periodic interval and the further sensor (d) of the group is arranged within an adjacent pole pitch.

2. Electrical linear drive according to claim 1, characterised thereby, that that region of the rotor (32), to which the sensor (38) responds, is displaceable relative to the permanent magnet (30) or the sensor (38) is displaceable relative to the stator (2) in the direction of the relative movement of stator (2) and rotor (32).

3. Electrical linear drive according to claim 1 or 2, characterised thereby, that the sensor (38) is a sensor (38) responding to control magnets (34) formed by the permanent magnets or by separate permanent magnets arranged on the displaceable region.

4. Electrical linear drive according to one of the preceding claims, characterised thereby, that the sensor is constructed as Hall probe (38), as reed contact, as photocell, als ultrasonic sensor, gas current sensor, inductive sensor or permeability sensor.

5. Electrical linear drive according to one of the preceding claims, characterised thereby, that the rotor (32) is substantially shorter than the stator (2) and that all equally numbered current conductors of the individual stator poles of a stator portion are connected together electrically into one current conductor group, preferably by series connection.

6. Electrical linear drive according to one of the preceding claims, characterised thereby, that three current conductors (I, II, III) are provided for each stator pole, three current conductor groups are provided for each stator portion and three sensors (a, b, c) are provided for each sensor group.

7. Electrical linear drive according to one of the preceding claims, characterised thereby, that sensors (a, b, c, d) are provided, which respond to magnetic fields and only to a certain magnetic pole, for example the south pole.

8. Use of the electrical linear drive according to one of the claims 1 to 7, in the drive of road vehicles, rail vehicles, magnetically hovering craft, fairground vehicles, magazine transport units, travelling pavements, pallets, ski-lifts, and material-conveying tracks.

9. Use of the drive according to one of the claims 1 to 7, as linear positioning drive.

**Revendications**

1. Entraînement linéaire électrique comportant un stator pourvu d'un enroulement polyphasé ainsi qu'un rotor pourvu d'aimants permanents (30), disposés espacés l'un de l'autre, le stator étant subdivisé en sections de stator comportant chacun plusieurs divisions polaires (τ), dont les enroulements de phase (I, II, III) peuvent être raccordés chacun à une source de courant, par un dispositif de commutation (40), des capteurs (38) étant prévus sur les différentes sections de stator, capteurs qui réagissent à des éléments de commande (34) prévus sur le stator et au moyen desquels une alimentation en courant de la phase correspondante, est commandé dans l'enroulement de phase respective et la présence du stator constitué en fonction de la position relative du rotor et de la section de stator, caratérisé en ce que les éléments de commande (34) sont disposés dans une rangée d'éléments de commande, les zones réagissant aux capteurs ayant chacun la longueur d'une division polaire et se répétant à une distance double de la division polaire, caractérisé en ce que les capteurs (a, b, c) associés aux phases et d'autres capteurs (d) sont rassemblés en groupe qui se répètent le long d'un stator selon un intervalle de périodicité correspondant à la longueur de la rangé délimitant des commandes, les capteurs (a, b, c) associés aux phases d'un groupe étant disposés à l'intérieur d'une division polaire (τ) dans l'intervalle de périodicité respectif et l'autre capteur (d) du groupe étant disposé à l'intérieur d'une division polaire voisine.

2. Entraînement linéaire électrique selon la revendication 1, caractérisé en ce que la zone du rotor (32) à laquelle réagit le capteur (38) est mobile par rapport aux aimants permanents (30), ou le capteur (38) est mobile par rapport au stator (2), dans le sens de déplacement relatif du stator (2) et du rotor (32).

3. Entraînement linéaire électrique selon la revendication 1 ou 2, caractérisé en ce que le capteur (38) est un capteur réagissant à des aimants de commande (34) formés par les aimants permanents ou par des aimants permanents disposés dans la zone mobile.

4. Entraînement linéaire électrique selon l'une des revendications ci-dessus, caractérisé en ce que le capteur est une sonde de Hall (38), un contact Reed, une cellule photo-électrique, un capteur à ultrasons, un capteur à courant gazeux, un capteur à induction ou un capteur à perméabilité.

5. Entraînement linéaire électrique selon l'une des revendications ci-dessus, caractérisé en ce que le rotor (32) est beaucoup plus court que le stator (2) et en ce que tous les contacteurs de courant de même nombre des différents pôles du stator d'une section de stator sont connectés électriquement pour former un groupe de contacteurs de courant de préférence en série.

6. Entraînement linéaire électrique selon l'une des revendications ci-dessus, caractérisé en ce qui'il est prévu trois contacteurs de courant (I, II, III) par pôle de stator, trois groupes de contacteurs de courant par section de stator, et trois capteurs (a, b, c) par groupe de capteur.

7. Entraînement linéaire électrique selon l'une des revendications ci-dessus, caractérisé en ce qu'il est prévu des capteurs (a, b, c) qui réagissent à des champs magnétiques et qui ne réagissent qu'à un pôle magnétique défini (par exemple pôle sud).

8. Utilisation de l'entraînement linéaire électrique selon l'une des revendications 1 à 7, pour l'entraînement d'unités de transport en particulier véhicules routiers, véhicules ferroviaires, véhicules à sustentation magnétique, véhicules de fêtes foraines, unités de manutention pour des pots, trottoirs roulants, palettes, remonte-pentes, convoyeurs de matériaux.

9. Utilisation de l'entraînement linéaire électrique selon l'une des revendications 1 à 7 comme entraînement linéaire de positionnement.

# FIG. 1

# FIG. 2

## FIG. 3

## FIG. 4

# FIG. 5

Polteilung

Wagen

Dauermagnete  30

Steuermagnete  34
(verschiebbar ±½τ)

Antriebsspulen  10

Strecke

Sonden  38

Leistungsschalter

Sonden – Periodizitätsintervall

EP 0 052 346 B1

# FIG.6

Belegt / Frei – Informationsaustausch
zwischen benachbarten Abschnitten

# FIG. 7

Sonden a,b,c,d — 206

von der Energiequelle

Eingabe / Ausgabe - Schaltung — 200

Logik- Schaltung — 208

Schaltung für Triac-Steuerung u.Phasenlage- Bestimmung — 210

Leistungs - Schalter ( Triacs ) — 212

z. Abschnitt n - 1

zum Abschnitt n + 1

zur Busleitung

zu den Antriebsspulen

EP 0 052 346 B1

# FIG. 8

E30

I    II    III

Tr I    Tr II    Tr III

E31

E32    E33    E34

● Leistungsstecker

□ Signalstecker

# FIG. 9

Vollbrückenschaltung

in Wahrheitstabelle   "0" : z.B. Triacs  1 u.4  Ein
in Wahrheitstabelle   "1" : z.B. Triacs  2 u.3  Ein

Brückenast      0 : z. B. Triacs  1 u. 4
Brückenast      1 : z. B. Triacs  2 u. 3

EP 0 052 346 B1

| a | b | c | d | Ph | $T_I$ | $T_{II}$ | $T_{III}$ | |
|---|---|---|---|---|---|---|---|---|
| 1 | 1 | 1 | 0 | 1 | 1 | 1 | 1 | |
| 1 | 1 | 1 | 0 | 0 | 0 | 0 | 0 | |
| 0 | 1 | 1 | 1 | 1 | 0 | 1 | 1 | |
| 0 | 1 | 1 | 1 | 0 | 1 | 0 | 0 | |
| 0 | 0 | 1 | 1 | 1 | 0 | 0 | 1 | Wagen da |
| 0 | 0 | 1 | 1 | 0 | 1 | 1 | 0 | |
| 0 | 0 | 0 | 1 | 1 | 0 | 0 | 0 | |
| 0 | 0 | 0 | 1 | 0 | 1 | 1 | 1 | |
| 1 | 0 | 0 | 0 | 1 | 1 | 0 | 0 | |
| 1 | 0 | 0 | 0 | 0 | 0 | 1 | 1 | |
| 1 | 1 | 0 | 0 | 1 | 1 | 1 | 0 | |
| 1 | 1 | 0 | 0 | 0 | 0 | 0 | 1 | |
| 0 | 0 | 0 | 0 | 1 | 0 | 0 | 0 | Wagen nicht da |
| 0 | 0 | 0 | 0 | 0 | 0 | 0 | 0 | |

## FIG. 10

Wahrheitstabelle für die Ansteuerlogik

Halbbrücke : 0 / 1 : nicht einschalten / einschalten

Vollbrücke : 0 / 1 : Brückenast 0/1 einschalten

Vorwärts / Rückwärts : $T_I$, $T_{II}$, $T_{III}$ invertieren

Blockieren : Festhalten des Schalt-musters $T_I$, $T_{II}$, $T_{III}$